(19) Europäisches Patentamt
European Patent Office
Office européen des brevets

(11) **EP 3 480 905 B1**

(12) **EUROPEAN PATENT SPECIFICATION**

(45) Date of publication and mention
of the grant of the patent:
**24.07.2024 Bulletin 2024/30**

(21) Application number: **17819933.7**

(22) Date of filing: **19.06.2017**

(51) International Patent Classification (IPC):
**H01S 3/0941** *(2006.01)*  **H01S 3/094** *(2006.01)*
**H01S 3/067** *(2006.01)*  **G02B 6/036** *(2006.01)*

(52) Cooperative Patent Classification (CPC):
**H01S 3/06733; G02B 6/036; H01S 3/094007;**
H01S 3/06729; H01S 3/0675; H01S 3/09415

(86) International application number:
**PCT/JP2017/022535**

(87) International publication number:
**WO 2018/003574 (04.01.2018 Gazette 2018/01)**

(54) **OPTICAL FIBER FOR AMPLIFICATION, AND LASER DEVICE**

OPTISCHE FASER ZUR VERSTÄRKUNG UND LASERVORRICHTUNG

FIBRE OPTIQUE POUR AMPLIFICATION ET DISPOSITIF LASER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.06.2016   JP 2016129763**
**05.12.2016   JP 2016235701**

(43) Date of publication of application:
**08.05.2019 Bulletin 2019/19**

(73) Proprietor: **Fujikura Ltd.**
**Tokyo 135-8512 (JP)**

(72) Inventors:
• **KITAHARA, Rintaro**
**Sakura-shi**
**Chiba 285-8550 (JP)**

• **GOHARA, Miyako**
**Sakura-shi**
**Chiba 285-8550 (JP)**

(74) Representative: **Plasseraud IP**
**66, rue de la Chaussée d'Antin**
**75440 Paris Cedex 09 (FR)**

(56) References cited:
JP-A- 2001 013 346     JP-A- 2001 013 346
JP-A- 2011 171 619     JP-A- 2016 149 432
JP-A- 2016 517 636     US-A1- 2011 146 071
US-A1- 2012 275 015

**Description**

Technical Field

The present invention relates to an amplification optical fiber and a laser device that can suppress the occurrence of a skew mode.

Background Art

Fiber laser devices are used in various fields, such as laser processing fields and medical fields, because these devices have excellent light condensing properties and high power density, and obtain light that provides a small beam spot. In such a fiber laser device, a rare-earth-doped fiber having a core doped with a rare earth element is used. In the rare-earth-doped fiber for use in the fiber laser device, a double cladding structure is typically adapted in order to enter a larger quantity of pumping light to the core. The rare-earth-doped fiber in the double cladding structure has a core doped with a rare earth element, an inner cladding surrounding the core, and an outer cladding surrounding the inner cladding. The outer cladding has a refractive index lower than the refractive index of the inner cladding. At least a part of pumping light entered to the inner cladding is reflected to the core side on the interface between the inner cladding and the outer cladding, and entered to the core. The light pumps the rare earth element doped in the core.

However, in the rare-earth-doped fiber in the double cladding structure as described above, in the case in which the cross sectional form of the inner cladding has a circular shape, the case sometimes occurs that pumping light is continuously reflected at a certain angle on the interface between the inner cladding and the outer cladding, and that the pumping light propagates through the inner cladding without being entered to the core. Such light propagating through the cladding without being transmitted through the core is referred to as a skew ray. When a skew ray occurs, the quantity of pumping light entered to the core is decreased, and the rare earth element doped in the core is hardly pumped.

As a technique of suppressing the occurrence of a skew mode, Patent Literature 1 below, for example, discloses a technique with which an optical fiber having a cladding in a polygonal cross sectional form is twisted about the center axis and fixed. It is considered that when the polygonal cladding is thus twisted and fixed, the pumping light propagating through the cladding repeats reflection on the outer circumferential surface of the cladding with changing the reflection angle and is easily entered to the core.

Patent Literature 2 discloses amplifying optical fiber and optical fiber amplifier.

Patent Literature 3 discloses thermal rounding shaped optical fiber for cleaving and splicing.

[Patent Literature 1] JP 2001-13346 A
[Patent Literature 2] US 2012/275015 A1
[Patent Literature 3] US 2011/146071 A1

Summary of Invention

As described above, an optical fiber having a cladding in a polygonal cross sectional form is typically prepared by drawing an optical fiber preform having a portion to be a cladding in a polygonal cross sectional form. However, the corners of the cladding are rounded by heat in drawing the preform, and the cross sectional form of the cladding can be a nearly circular shape. When the cross sectional form of the cladding has a nearly circular shape as described above, the suppression of a skew mode is not sometimes achieved as intended, even though the cladding is twisted like the optical fiber described in Patent Literature 1 above.

Therefore, an object of the present invention is to provide an amplification optical fiber and a laser device that further suppress the occurrence of a skew mode.

To solve the problem, an amplification optical fiber of the present invention includes features as presented in the independent claim 1.

A laser device according to the present invention includes the amplification optical fiber described above and at least one laser light source configured to emit light that propagates through the amplification optical fiber.

The circumcircle of the outer circumference of the inner cladding is a circle having the minimum area in circles that can include the inner cladding on the inner side in the cross section vertical to the longitudinal direction of the optical fiber. As described above, the shape of the outer circumference of the inner cladding has a polygon with rounded corners. Thus, the circumcircle of the outer circumference of the inner cladding is in contact with the beveled vertices of the outer circumference of the inner cladding. The inscribed circle of the outer circumference of the inner cladding is a circle having the maximum area in circles that are formed on the inner side of the outer circumference of the inner cladding in the cross section vertical to the longitudinal direction of the optical fiber. This inscribed circle is in contact with the edges of the outer circumference of the inner cladding. Note that, the diameter d1 of the inscribed circle and the diameter d2 of the circumcircle are determined on a given cross section vertical to the longitudinal direction of the optical fiber.

In the amplification optical fiber, the inner cladding is sandwiched by the core having the refractive index higher than the refractive index of the inner cladding and the outer cladding having the refractive index lower than the refractive index of the inner cladding. The pumping light entered to the inner cladding can be entered to the core. The present inventors found that even in the case in which the shape of the outer circumference of the inner cladding in the cross section vertical to the longitudinal direction has a polygon with rounded corners, the occurrence of a skew mode can be suppressed by twisting the inner cladding as described above as long as the angularity c is 0.15 or more. When the occurrence of a skew mode is suppressed, the pumping light entered to the inner cladding is easily entered to the core doped with an active element and easily amplifies the light propagating through the core.

Note that, A is equal to the ratio of the diameter of the inscribed circle of an accurate regular polygon to the diameter of the circumcircle of the accurate regular polygon (the diameter of the inscribed circle/the diameter of the circumcircle). Therefore, supposing that the shape of the outer circumference of the inner cladding is an accurate regular polygon, d1/d2 = A. Thus, the angularity c is one. Supposing that the shape of the outer circumference of the inner cladding is a circular shape, d1/d2 = 1. Thus, the angularity c is zero. As described above, the angularity c is the numerical value of zero or more and one or less. In the case in which the angularity c is close to one, this means that the shape of the outer circumference of the inner cladding is almost an accurate regular polygon. In the case in which the angularity c is close to zero, this means that the shape of the outer circumference of the inner cladding is a nearly circular shape. Thus, from the viewpoint of suppressing the occurrence of a skew mode, the angularity c is preferably one as close as possible. However, the present inventors found that even though the angularity c is 0.8 or less, the occurrence of a skew mode can be suppressed when the inner cladding is twisted as described above. In the case in which the angularity c is set to 0.8 or less, a heating temperature in drawing an optical fiber preform can be increased more or less, and hence the crystallization of the active element doped in the core can be suppressed. When the crystallization of the active element is suppressed as described above, an increase in the transmission loss of the amplification optical fiber can be suppressed. Specifically, in an amplification optical fiber whose core is doped with an active element at high concentration for increasing outgoing light, suppressing the crystallization of the active element is effective.

The angularity c is more preferably 0.25 or more.

When the angularity c is 0.25 or more, the inner cladding is twisted as described above, and hence the occurrence of a skew mode can be further suppressed.

Expression (3) is preferably held, and Expression (4) is more preferably held

$$c \times N \geq 0.75 \quad \dots \quad (3)$$

$$c \times N \geq 2.5 \quad \dots \quad (4)$$

where a number of the twists per meter in a direction in parallel with the longitudinal direction is defined as N.

When the angularity c is 0.15 or more as described above, even in the case in which the angularity c is small more or less, an increase in a number N of twists satisfies the conditions of Expression (3) above, and hence the occurrence of a skew mode can be suppressed. The conditions of Expression (4) above are satisfied, and hence the occurrence of a skew mode can be more suppressed. In the case in which the angularity c is large more or less, the conditions of Expression (3) above are satisfied, and hence the occurrence of a skew mode can be suppressed, even though the number N of twists is decreased. In the case in which the twist as described above is applied to the inner cladding in manufacture of the amplification optical fiber, a decrease in the number N of twists enables the suppression of the occurrence of manufacture errors of the amplification optical fiber and so on. In the following, the number of twists applied to the inner cladding per meter in the direction in parallel with the longitudinal direction of the amplification optical fiber is sometimes simply referred to as "a twisted rate N."

As described above, in accordance with the present invention, there are provided an amplification optical fiber and a laser device that can suppress the occurrence of a skew mode.

Brief Description of Drawings

FIG. 1 is a schematic diagram of a laser device according to a first example.
FIG. 2 is a diagram of a cross section vertical to the longitudinal direction of the amplification optical fiber shown in FIG. 1.
FIG. 3 is a schematic diagram of a laser device according to a second example.

FIG. 4 is a graph of the relationship between the length of an amplification optical fiber and the quantity of light absorbed by the amplification optical fiber.

FIG. 5 is a graph of the relationship between a skew suppression index and a product of an angularity c and a twisted rate N.

Detailed Description

The invention is defined by the claims. In the following, examples of an amplification optical fiber and a laser device will be described in detail with reference to the drawings. The examples described below are provided for easy understanding of the present invention. The example will not interpret the present invention in a limited way. Note that, for easy understanding, the scales in the drawings are sometimes different from the scales described in the following description.

(First Example)

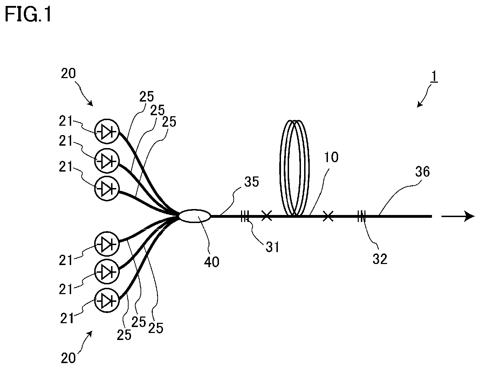

FIG. 1 is a diagram of a laser device according to a first example. As shown in FIG. 1, a laser device 1 includes, as main components, an amplification optical fiber 10, a pumping light source 20, an optical combiner 40, an optical fiber 35 connected to a first side of the amplification optical fiber 10, a first fiber Bragg grating (FBG) 31 provided on the optical fiber 35, an optical fiber 36 connected to a second side of the amplification optical fiber 10, and a second FBG 32 provided on the optical fiber 36. In the laser device 1, the amplification optical fiber 10, the first FBG 31, and the second FBG 32 configure a resonator.

The pumping light source 20 is configured of a plurality of laser diodes 21. The laser diode 21 is a Fabry-Perot semiconductor laser using a GaAs semiconductor as a material, for example. The laser diode 21 emits pumping light at a center wavelength of 915 nm. The laser diodes 21 of the pumping light source 20 are individually connected to optical fibers 25. The pumping light emitted from the laser diodes 21 propagate through the optical fibers 25 as multimode light, for example.

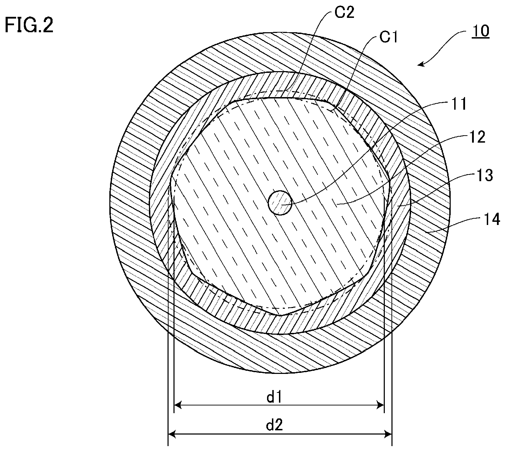

FIG. 2 is a diagram of a cross section vertical to the longitudinal direction of the amplification optical fiber 10 shown in FIG. 1. As shown in FIG. 2, the amplification optical fiber 10 includes, as main components, a core 11, an inner cladding 12 surrounding the outer circumferential surface of the core 11 with no gap, an outer cladding 13 covering the outer circumferential surface of the inner cladding 12, and a coating layer 14 covering the outer cladding 13. The amplification optical fiber 10 has a so-called double cladding structure. The refractive index of the inner cladding 12 is lower than the refractive index of the core 11. The refractive index of the outer cladding 13 is lower than the refractive index of the inner cladding 12.

An example of a material configuring the core 11 includes silica doped with an element, such as germanium (Ge), which increases the refractive index, and an active element, such as ytterbium (Yb), which is pumped by pumping light emitted from the pumping light source 20. The active element includes rare earth elements. The rare earth elements include thulium (Tm), cerium (Ce), neodymium (Nd), europium (Eu), and erbium (Er), in addition to Yb. The active element includes bismuth (Bi), in addition to the rare earth elements.

The inner cladding 12 is twisted about the center axis of the core 11. In the cross section vertical to the longitudinal direction, the shape of the outer circumference of the inner cladding 12 has a polygon with rounded corners. The shape of the outer circumference of the inner cladding 12 has a regular hexagon with rounded corners. Specifically, in the outer circumference of the inner cladding 12 in the cross section vertical to the longitudinal direction, an angularity c defined by Expression (1) below and Expression (2) below is 0.15 or more and 0.8 or less. Here, n is the number of vertices of a polygon. For example, n = 7 as described above. d2 is the diameter of a circumcircle C2 of the outer circumference of the inner cladding 12. d1 is the diameter of an inscribed circle C1 of the outer circumference of the inner cladding 12.

$$A = \cos(\pi/n) \quad \dots \quad (1)$$

$$c = \{1 - (d1/d2)\}/(1 - A) \quad \dots \quad (2)$$

An example of a material configuring the inner cladding 12 can include pure silica doped with no dopant. Note that, the material of the inner cladding 12 may be doped with an element, such as fluorine (F), which decreases the refractive index.

The outer cladding 13 is formed of a resin or silica. An example of the resin includes an ultraviolet curing resin. An example of silica includes silica doped with a dopant, such as fluorine (F), which decreases the refractive index of the outer cladding 13 to be lower than the refractive index of the inner cladding 12.

An example of a material configuring the coating layer 14 includes an ultraviolet curing resin. In the case in which the outer cladding 13 is formed of a resin, the coating layer 14 is formed of an ultraviolet curing resin different from the resin configuring the outer cladding.

The optical fiber 35 connected to the first side of the amplification optical fiber 10 includes, as main components, a core doped with no active element, an inner cladding surrounding the outer circumferential surface of the core with no gap, an outer cladding covering the outer circumferential surface of the inner cladding, and a coating layer covering the outer cladding. The core of the optical fiber 35 has a configuration almost similar to the configuration of the core 11 of the amplification optical fiber 10 except that no active element is doped. The core of the optical fiber 35 is connected to the core 11 of the amplification optical fiber 10. The inner cladding of the optical fiber 35 is connected to the inner cladding 12 of the amplification optical fiber 10. On the core of the optical fiber 35, the first FBG 31 is provided as a first mirror. The first FBG 31 is provided on the first side of the amplification optical fiber 10. The first FBG 31 has a portion having a high refractive index cyclically repeated along the longitudinal direction of the optical fiber 35. The first FBG 31 is configured to reflect light having at least a part of wavelengths in the light emitted from the pumped active element of the amplification optical fiber 10 when the cycle at which the high refractive index is repeated is adjusted. The reflectance of the first FBG 31 is higher than the reflectance of the second FBG 32, described later. The first FBG 31 preferably reflects light at a desired wavelength in the light emitted from the active element at a reflectance of 90% or more, and more preferably at a reflectance of 99% or more. In the case in which the active element is ytterbium as described above, the wavelength of the light reflected off the first FBG 31 is 1,090 nm, for example.

The optical fiber 36 connected to the second side of the amplification optical fiber 10 includes, as main components, a core doped with no active element, a cladding surrounding the outer circumferential surface of the core with no gap, and a coating layer covering the outer circumferential surface of the cladding. The core of the optical fiber 36 is connected to the core 11 of the amplification optical fiber 10. The cladding of the optical fiber 36 is connected to the inner cladding 12 of the amplification optical fiber 10. On the core of the optical fiber 36, the second FBG 32 is provided as a second mirror. The second FBG 32 is provided on the second side of the amplification optical fiber 10. The second FBG 32 has a portion having a high refractive index repeated in a certain cycle along the longitudinal direction of the optical fiber 36. The second FBG 32 is configured to reflect light having at least a part of wavelengths in the light reflected off the first FBG 31 at a reflectance lower than the reflectance of the first FBG 31. The second FBG 32 preferably reflects the light having at least a part of wavelengths in the light reflected off the first FBG 31 at a reflectance of 5% to 50%, and more preferably at a reflectance of 5% to 10%. Nothing is specifically connected to a second end of the optical fiber 36 on the opposite side of the amplification optical fiber 10 side. However, a glass rod, for example, may be connected to the second end.

Each of the cores of the optical fibers 25 is connected with the inner cladding of the optical fiber 35 in the optical combiner 40. Thus, the optical fibers 25, through which pumping light emitted from each of the laser diodes 21 propagates, are optically coupled to the inner cladding 12 of the amplification optical fiber 10 through the inner cladding of the optical fiber 35.

Next, the operation and effect of the laser device 1 will be described.

First, after pumping light is emitted from each of the laser diodes 21 of the pumping light source 20, the pumping light is entered to the inner cladding 12 of the amplification optical fiber 10 through the inner cladding of the optical fiber 35. The inner cladding 12 is sandwiched by the core 11 having a refractive index higher than the refractive index of the inner cladding 12 and the outer cladding 13 having a refractive index lower than the refractive index of the inner cladding 12. The pumping light entered to the inner cladding 12 mainly propagates through the inner cladding 12, and the pumping light is entered to the core 11. The pumping light entered to the core 11 as described above pumps the active element doped in the core 11. The pumped active element emits spontaneous emission light at a specific wavelength. In the case in which the active element is, for example, ytterbium, the spontaneous emission light at this time is light having a certain wavelength range including a wavelength of 1,090 nm. The spontaneous emission light propagates through the core 11 of the amplification optical fiber 10. The light having a part of the wavelengths is reflected off the first FBG 31. In the light thus reflected, light having a wavelength that is reflected off the second FBG 32 is reflected off the second FBG 32. The reflected light travels back and forth in the resonator. The light is amplified by stimulated emission occurring when the light reflected off the first FBG 31 and the second FBG 32 propagates through the core 11 of the amplification optical fiber 10. When the gain becomes equal to the attenuation in the resonator, a laser oscillation state is achieved. A part of the light resonating between the first FBG 31 and the second FBG 32 is transmitted through the second FBG 32 to be emitted from the end part of the optical fiber 36.

As described above, in the amplification optical fiber 10, the shape of the outer circumference of the inner cladding 12 has a polygon with rounded corners in the cross section vertical to the longitudinal direction. That is, the outer circumferential surface of the inner cladding 12 is a configuration having a plurality of faces at different angles. The inner cladding 12 is twisted about the center axis of the core 11. The pumping light propagating through the inner cladding 12 easily repeats reflection while changing the reflection angle on the interface between the inner cladding 12 and the outer cladding 13. Thus, the occurrence of a skew mode can be suppressed. Consequently, in the amplification optical fiber 10, the pumping light is easily entered to the core 11, the active element doped in the core 11 is easily pumped, and hence the light propagating through the core 11 is easily amplified.

As described above, the inner cladding 12 has the angularity c that is 0.15 or more and 0.8 or less. The present inventors found that even in the case in which the shape of the outer circumference of the inner cladding 12 in the cross section vertical to the longitudinal direction has a polygon with rounded corners, the occurrence of a skew mode can be suppressed when the twist as described above is applied to the inner cladding 12 as long as the angularity c is 0.15 or more. From the viewpoint of more easily suppressing the occurrence of a skew mode, the angularity c is preferably 0.25 or more.

Note that, the angularity c is zero in a circle and one in an accurate regular polygon. Therefore, from the viewpoint of suppressing the occurrence of a skew mode, the angularity c is preferably one as close as possible. However, the present inventors found that even though the angularity c is 0.8 or less, the occurrence of a skew mode can be suppressed when the twists as described above are applied to the inner cladding 12. In the case in which the angularity c is set to 0.8 or less, a heating temperature in drawing an optical fiber preform can be increased more or less, and hence the crystallization of the active element doped in the core 11 can be suppressed. The crystallization of the active element is suppressed as described above, so that an increase in the transmission loss of the amplification optical fiber 10 can be suppressed. Specifically, in the amplification optical fiber 10 whose core is doped with an active element at high concentration for increasing outgoing light, suppressing the crystallization of the active element is effective.

When the number of twists applied to the inner cladding 12 per meter in the direction in parallel with the longitudinal direction is defined as N, Expression (3) below is preferably held, and Expression (4) below is more preferably held.

$$c \times N \geq 0.75 \quad ... \quad (3)$$

$$c \times N \geq 2.5 \quad ... \quad (4)$$

When the angularity c is 0.15 or more as described above, even in the case in which the angularity c is small more or less, an increase in the twisted rate N satisfies the conditions of Expression (3) above, and hence the occurrence of a skew mode can be suppressed. The conditions of Expression (4) above are satisfied, and hence the occurrence of a skew mode can be more suppressed. In the case in which the angularity c is large more or less, the conditions of Expression (3) above are satisfied, and hence the occurrence of a skew mode can be suppressed, even though the twisted rate N is decreased. In the case in which the optical fiber preform is rotated to twist the inner cladding 12 in manufacture of the amplification optical fiber 10 as described above, a decrease in the twisted rate N enables the suppression of the occurrence of, for example, manufacture errors of the amplification optical fiber 10. A decrease in the twisted rate N can suppress a decrease in the drawing speed in manufacture of the amplification optical fiber 10 as described above. Thus, the amplification optical fiber 10 having the twisted inner cladding 12 is easily manufactured. From such a viewpoint, the upper limit of the twisted rate N is preferably 30 or less, and more preferably 15 or less. Consequently, since the upper limit of the angularity c is 0.8 as described above, the upper limit of $c \times N$ is preferably 24 or less. In accordance with the claimed invention, the upper limit of $c \times N$ is 12 or less.

The twist applied to the inner cladding 12 is preferably permanent twist. Here, permanent twist means twist applied in manufacture of an optical fiber, not twist applied after an untwisted optical fiber is manufactured. The twist applied to the inner cladding 12 is permanent twist, and hence ununiform variations in the refractive index of the core 11 by elastic stress due to a twist is suppressed. Thus, in the case in which light propagating through the core 11 propagates in multimode, mode coupling can be suppressed.

Note that, as described above, in manufacture of the amplification optical fiber 10 by rotating the optical fiber preform, the core 11 sometimes has a slight spiral form, and is moved off center. In this case, the amount of eccentricity of the core 11 to the center of the inscribed circle C1 is preferably 5 um or less. As described above, the amount of eccentricity of the core 11 is suppressed, and hence the amplification optical fiber 10 is easily connected to another optical fiber.

(Second Example)

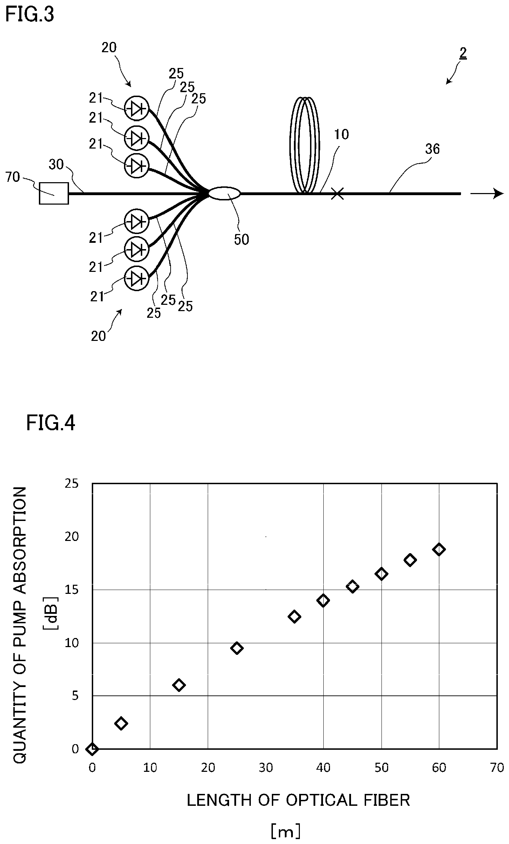

Next, a second example will be described with reference to FIG. 3 in detail. Note that, components the same as or equivalent to ones of the first example are designated the same reference signs, and the duplicate description is sometimes omitted, unless otherwise specified.

FIG. 3 is a diagram of a laser device. As shown in FIG. 3, a laser device 2 is different from the laser device 1 according to the first example in that the laser device 2 is a master oscillator power amplifier (MO-PA) fiber laser device.

Thus, the laser device 2 includes a seed light source 70 and an optical fiber 30 connected to the seed light source 70.

The seed light source 70 is formed of, for example, a laser diode or a fiber laser. The optical fiber 30 includes, as main components, a core doped with no active element, a cladding surrounding the outer circumferential surface of the core with no gap, and a coating layer covering the outer circumferential surface of the cladding. Seed light emitted from the seed light source 70 propagates through the core of the optical fiber 30.

At an optical combiner 50, each of the optical fibers 25 is connected to a first end of an amplification optical fiber 10 together with the optical fiber 30. Specifically, a core 11 of the amplification optical fiber 10 is connected to the core of the optical fiber 30 in such a manner that the core of the optical fiber 30 is optically coupled to the core 11 of the amplification optical fiber 10. Thus, the seed light emitted from the seed light source 70 is entered to the core 11 of the amplification optical fiber 10 through the core of the optical fiber 30, and propagates through the core 11. Each of the cores of the optical fibers 25 is connected to an inner cladding 12 of the amplification optical fiber 10 in such a manner that each of the cores of the optical fibers 25 is optically coupled to the inner cladding 12 of the amplification optical fiber 10. Thus, pumping light emitted from laser diodes 21 of a pumping light source 20 is entered to the inner cladding 12 of the amplification optical fiber 10 through the optical fibers 25, and mainly propagates through the inner cladding 12 to pump an active element doped in the core 11. Therefore, the seed light propagating through the core 11 is amplified by stimulated emission of the pumped active element, and the amplified seed light is emitted as outgoing light from the amplification optical fiber 10. The light emitted from the amplification optical fiber 10 is emitted through an optical fiber 36 similarly to the first example.

Also, the amplification optical fiber 10 is used, and hence the occurrence of a skew mode can be suppressed.

The foregoing description shows an example in which the shape of the outer circumference of the inner cladding 12 has a regular heptagon with rounded corners in the cross section vertical to the longitudinal direction. However, in the cross section vertical to the longitudinal direction, the shape of the outer circumference of the inner cladding 12 is not specifically limited as long as the shape has a polygon with rounded corners. For example, the shape may have a regular hexagon or a regular octagon with rounded corners.

[Examples]

In the following, the examples and comparative examples will be described. However, the present invention is not limited to the examples below.

<Example 1>

An optical fiber similar to the amplification optical fiber 10 was prepared by a method below. First, an optical fiber preform was prepared. The optical fiber preform was configured of glass having refractive index profiles the same as the refractive index profiles of the core 11 and the inner cladding 12 configuring the amplification optical fiber 10. That is, an optical fiber preform was prepared in which the outer circumferential surface of a columnar material to be a core 11 was surrounded by a material to be an inner cladding 12 with no gap. The optical fiber preform had a regular heptagonal shape in the cross section vertical to the longitudinal direction. Subsequently, this optical fiber preform was suspended as the longitudinal direction was vertical. The optical fiber preform was placed in a drawing furnace, and the lower end part of the optical fiber preform was heated. Subsequently, from the heated lower end part of the optical fiber preform, molten glass was drawn out of the drawing furnace at a predetermined drawing speed, and the glass was cooled. In the drawing, the drawing tension was adjusted in such a manner that the angularity c was 0.55. The optical fiber preform was drawn with rotation about the center axis, and hence the inner cladding 12 was twisted. The rotation speed of the optical fiber preform was changed in drawing the preform, and hence the twisted rate N was changed as shown in Table 1. After that, the outer circumferential surface of the inner cladding 12 was covered with an outer cladding 13 and a coating layer 14 which are formed of, for example, ultraviolet curing resins. Thus, an amplification optical fiber according to Example 1 was prepared. Note that, the relative refractive index difference between the core and the inner cladding was 0.12%.

The shape of the outer circumference of the optical fiber preform in the cross section vertical to the longitudinal direction (the shape of the outer circumference of the inner cladding), the angularity c of the inner cladding in the cross section vertical to the longitudinal direction, the twisted rate N of the inner cladding, and the value of c × N were collectively shown in Table 1 below together with other examples and comparative examples described below.

<Comparative Example 1>

An amplification optical fiber was prepared similarly to Example 1 except that an optical fiber preform was not rotated in drawing the preform.

<Example 2>

An amplification optical fiber was prepared similarly to Example 1 except that the angularity c was set to 0.25, and that the twisted rate N was changed as shown in Table 1.

<Example 3>

An amplification optical fiber was prepared similarly to Example 1 except that the angularity c was set to 0.15, and that the twisted rate N was changed as shown in Table 1.

<Example 4>

An amplification optical fiber was prepared similarly to Example 1 except that the shape of the outer circumference of the optical fiber preform in the cross section vertical to the longitudinal direction was a regular hexagon, that the angularity c was set to 0.34, and that the twisted rate N was changed as shown in Table 1.

<Comparative Example 2>

An amplification optical fiber was prepared similarly to Example 4 except that an optical fiber preform was not rotated in drawing the preform.

<Example 5>

An amplification optical fiber was prepared similarly to Example 1 except that the shape of the outer circumference of the optical fiber preform in the cross section vertical to the longitudinal direction was a regular octagon, that the angularity c was set to 0.64, and that the twisted rate N was changed as shown in Table 1.

<Comparative Example 3>

An amplification optical fiber was prepared similarly to Example 5 except that an optical fiber preform was not rotated in drawing the preform.

<Comparative Examples 4 to 6>

An amplification optical fiber was prepared similarly to Example 1 except that the angularity c was set to 0.09, and that the twisted rate N was changed as shown in Table 1.

(Evaluation of the Effect of Suppressing a Skew Mode)

The effect of suppressing a skew mode was evaluated on the amplification optical fibers of the examples and the comparative examples by a method described below.
The effect of suppressing a skew mode was evaluated by defining a skew suppression index $\gamma$ as below. The skew suppression index $\gamma$ was defined by Expression (5) below.

$$\gamma = \alpha_L / \alpha_S \quad \cdots \quad (5)$$

Here, $\alpha_L$ and $\alpha_s$ were determined as below. First, the amplification optical fiber was coiled in circles in an inner diameter of 130 mm. In the following, the optical fiber coiled in circles as described above is referred to as a fiber coil. The amplification optical fiber is coiled in circles in this manner. Consequently, microbends do not easily occur and hardly exert the effect of suppressing a skew mode. Thus, it is considered that almost no microbends effected the effect of suppressing a skew mode evaluated by the method below.
Subsequently, light at a wavelength of 915 nm was entered to the end on the inner radius side of the fiber coil, and light emitted from the end on the outer radius side of the fiber coil was measured using a power meter. The power of light entered to the fiber coil is measured in advance, and this enables the determination of the transmission loss of light of the fiber coil, i.e. the quantity of light absorbed by the amplification optical fiber, based on the difference between the power of the light entered to the fiber coil and the power of the light emitted from the end on the outer radius side of the fiber coil.

Subsequently, the fiber coil was cut from the end on the outer radius side of the fiber coil to change the length of the amplification optical fiber. The quantity of light absorbed by the amplification optical fiber was determined by a method similar to the method described above. Thus, the quantity of pump absorption corresponding to the length of the amplification optical fiber can be determined as in a graph shown in FIG. 4. Graphs like the graph shown in FIG. 4 were prepared on each of the amplification optical fibers, and Expression (6) below was determined as the approximate curve of a quadratic function on the plot.

$$y = ax^2 + bx + c \quad \ldots \quad (6)$$

Here, it is considered that the quantity of pump absorption of the amplification optical fiber is preferably at least about 21 dB. Thus, under the condition y = 21, the value of x was L, and $\alpha_L$ was defined as Expression (7) below.

$$\alpha_L = 21/L \quad \ldots \quad (7)$$

On the other hand, $\alpha_s$ was defined as the amount of light absorbed to the amplification optical fiber in the case in which no skew mode occurred. That is, $\alpha_s$ can be the quantity of pump absorption per unit length in the case in which the amplification optical fiber is short, which can be expressed by Expression (8) below.

$$\alpha_s = \lim_{x \to 0} \frac{dy}{dx} = b \quad \cdots (8)$$

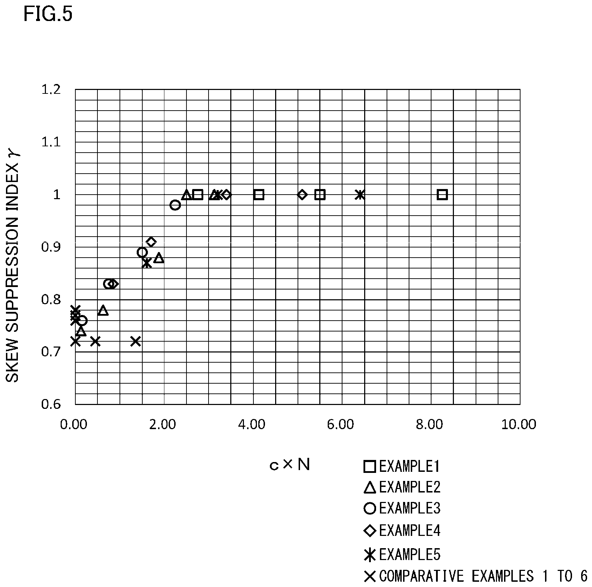

The effect of suppressing a skew mode was evaluated on the amplification optical fibers based on the index $\gamma$ defined as described above. The result is shown in Table 1 and FIG. 5. FIG. 5 is a graph of the relationship between the skew suppression index and a product of the angularity c and the number N of twists. In FIG. 5, the horizontal axis expresses a product of the angularity c and the twisted rate N, and the vertical axis expresses the skew suppression index $\gamma$.

Table 1

| | | Shape of the Outer Circumference of the Inner Cladding | Angularity c | Twisted Rate N [Rotation/m] | c × N | $\gamma$ |
|---|---|---|---|---|---|---|
| Comparative Example 1 | | Heptagon | 0.55 | 0 | 0.00 | 0.77 |
| Example 1 | 1 | Heptagon | 0.55 | 5 | 2.75 | 1 |
| | 2 | Heptagon | 0.55 | 7.5 | 4.13 | 1 |
| | 3 | Heptagon | 0.55 | 10 | 5.50 | 1 |
| | 4 | Heptagon | 0.55 | 15 | 8.25 | 1 |
| Example 2 | 1 | Heptagon | 0.25 | 0.5 | 0.13 | 0.74 |
| | 2 | Heptagon | 0.25 | 2.5 | 0.63 | 0.78 |
| | 3 | Heptagon | 0.25 | 7.5 | 1.88 | 0.88 |
| | 4 | Heptagon | 0.25 | 10 | 2.50 | 1 |
| | 5 | Heptagon | 0.25 | 12.5 | 3.13 | 1 |
| Example 3 | 1 | Heptagon | 0.15 | 1 | 0.15 | 0.76 |
| | 2 | Heptagon | 0.15 | 5 | 0.75 | 0.83 |
| | 3 | Heptagon | 0.15 | 10 | 1.50 | 0.89 |
| | 4 | Heptagon | 0.15 | 15 | 2.25 | 0.98 |
| Comparative Example 2 | | Hexagon | 0.34 | 0 | 0.00 | 0.78 |

(continued)

|  |  | Shape of the Outer Circumference of the Inner Cladding | Angularity c | Twisted Rate N [Rotation/m] | c × N | $\gamma$ |
|---|---|---|---|---|---|---|
| Example 4 | 1 | Hexagon | 0.34 | 2.5 | 0.85 | 0.83 |
| | 2 | Hexagon | 0.34 | 5 | 1.70 | 0.91 |
| | 3 | Hexagon | 0.34 | 10 | 3.40 | 1 |
| | 4 | Hexagon | 0.34 | 15 | 5.10 | 1 |
| Comparative Example 3 | | Octagon | 0.64 | 0 | 0.00 | 0.76 |
| Example 5 | 1 | Octagon | 0.64 | 2.5 | 1.60 | 0.87 |
| | 2 | Octagon | 0.64 | 5 | 3.20 | 1 |
| | 3 | Octagon | 0.64 | 10 | 6.40 | 1 |
| Comparative Example 4 | | Heptagon | 0.09 | 0 | 0.00 | 0.72 |
| Comparative Example 5 | | Heptagon | 0.09 | 5 | 0.45 | 0.72 |
| Comparative Example 6 | | Heptagon | 0.09 | 15 | 1.35 | 0.72 |

Table 1 and FIG. 5 reveal that in Comparative Examples 4 to 6 in which the angularity c was 0.09, the value of the skew suppression index $\gamma$ was not changed even though the inner cladding was twisted. On the other hand, in Examples 1 to 5 in which the angularity c was set to 0.15 or more, the skew suppression index $\gamma$ was increased by twisting the inner cladding. Thus, it is revealed that the angularity c of the inner cladding is set to a predetermined value or more, and this easily suppresses the occurrence of a skew mode in applying twist to the inner cladding. The comparison of Comparative Example 1 with Example 1, the comparison of Comparative Example 2 with Example 4, and the comparison of Comparative Example 3 with Example 5 reveal that in the case in which the angularity c is a predetermined value or more, the skew suppression index $\gamma$ is increased as the twisted rate N is increased. FIG. 5 reveals that in the case in which the angularity c is a predetermined value or more, the skew suppression index $\gamma$ is nearly proportional to the product until the product of the angularity c and the number N of twists is increased more or less.

As described above, in accordance with the present invention, there is provided an amplification optical fiber that can suppress the occurrence of a skew mode. The use of the amplification optical fiber is expected in the fields of processing machines, medical laser devices, and any other devices.

Reference Signs List

| | |
|---|---|
| 1, 2 | laser device |
| 10 | amplification optical fiber |
| 11 | core |
| 12 | inner cladding |
| 13 | outer cladding |
| 14 | coating layer |
| 20 | pumping light source |
| 21 | laser diode |
| 31 | first FBG |
| 32 | second FBG |
| 40, 50 | optical combiner |
| 70 | seed light source |

**Claims**

1.  An amplification optical fiber (10) comprising:

a core (11) doped with an active element;
an inner cladding (12) surrounding the core (11), the inner cladding (12) having a refractive index lower than a refractive index of the core (11); and
an outer cladding (13) surrounding the inner cladding (12), the outer cladding (13) having a refractive index lower than a refractive index of the inner cladding (12), wherein:

the inner cladding (12) is twisted about a center axis of the core (11);
in a cross section vertical to a longitudinal direction, an outer circumference of the inner cladding (12) has a polygon with rounded corners; and
an angularity c defined by Expression (1) and Expression (2) is 0.15 or more and 0.8 or less,

$$A = \cos(\pi/n) \quad \dots \quad (1)$$

$$c = \{1 - (d1/d2)\}/(1 - A) \quad \dots \quad (2)$$

where a number of vertices of the polygon is defined as n, a diameter of a circumcircle of the outer circumference of the inner cladding (12) is defined as d2, and a diameter of an inscribed circle of the outer circumference of the inner cladding (12) is defined as d1,
where a number of the twists per meter in a direction in parallel with the longitudinal direction is defined as N and
**characterized in that** $c \times N \geq 2.25$, and $c \times N$ is 12 or less.

2. The amplification optical fiber (10) according to claim 1, wherein
the angularity c is 0.25 or more and 0.8 or less.

3. The amplification optical fiber (10) according to any one of the preceding claims, wherein $c \times N \geq 2.5$, and $c \times N$ is 12 or less.

4. The amplification optical fiber (10) according to any of the preceding claims, wherein
an eccentricity of the core (11) to the center of the inscribed circle is less than or equal to $5 \times 10^{-6}$ m.

5. The amplification optical fiber (10) according to any one of the preceding claims, wherein the number n of vertices of the polygon is n = 6 or n = 8.

6. A laser device (1, 2) comprising:

the amplification optical fiber (10) according to any one of the preceding claims; and
at least one laser light source configured to emit light that propagates through the amplification optical fiber (10) .


**Patentansprüche**

1. Optische Verstärkungsfaser (10), umfassend:

einen Kern (11), der mit einem aktiven Element dotiert ist;
eine innere Umhüllung (12), die den Kern (11) umgibt, wobei die innere Umhüllung (12) einen Brechungsindex aufweist, der niedriger ist als ein Brechungsindex des Kerns (11); und
eine äußere Umhüllung (13), die die innere Umhüllung (12) umgibt, wobei die äußere Umhüllung (13) einen Brechungsindex aufweist, der niedriger ist als ein Brechungsindex der inneren Umhüllung (12), wobei:

die innere Umhüllung (12) um eine Mittelachse des Kerns (11) verdreht ist;
in einem Querschnitt senkrecht zu einer Längsrichtung ein Außenumfang der inneren Umhüllung (12) ein Polygon mit abgerundeten Ecken aufweist, und
eine durch Ausdruck (1) und Ausdruck (2) definierte Winkligkeit c 0,15 oder mehr und 0,8 oder weniger beträgt,

$$A = \cos(\pi/n) \dots (1)$$

$$c = \{1 - (d1/d2)\} / (1 - A) \dots (2)$$

wobei die Anzahl der Scheitelpunkte des Polygons als n definiert ist, ein Durchmesser eines Umkreises des Außenumfangs der inneren Umhüllung (12) als d2 definiert ist und ein Durchmesser eines umschriebenen Kreises des Außenumfangs der inneren Umhüllung (12) als d1 definiert ist,
wobei eine Anzahl der Verdrehungen pro Meter in einer Richtung parallel zur Längsrichtung als N definiert ist und
**dadurch gekennzeichnet, dass**
$c \times N \geq 2{,}25$ und $c \times N$ ist 12 oder weniger.

2. Optische Verstärkungsfaser (10) nach Anspruch 1, wobei
die Winkligkeit c 0,25 oder mehr und 0,8 oder weniger beträgt.

3. Optische Verstärkungsfaser (10) nach einem der vorhergehenden Ansprüche, wobei
$c \times N \geq 2{,}5$ ist und $c \times N$ ist 12 oder weniger.

4. Optische Verstärkungsfaser (10) nach einem der vorhergehenden Ansprüche, wobei
eine Exzentrizität des Kerns (11) zum Mittelpunkt des umschriebenen Kreises kleiner als oder gleich $5 \times 10^{-6}$ m ist.

5. Optische Verstärkungsfaser (10) nach einem der vorhergehenden Ansprüche, wobei die Anzahl n der Scheitelpunkte des Polygons n = 6 oder n = 8 ist.

6. Laservorrichtung (1, 2) umfassend:

die optische Verstärkungsfaser (10) nach einem der vorhergehenden Ansprüche; und
mindestens eine Laserlichtquelle, die so konfiguriert ist, dass sie Licht emittiert, das sich durch die optische Verstärkungsfaser (10) ausbreitet.

**Revendications**

1. Fibre optique d'amplification (10) comprenant :

un noyau (11) dopé avec un élément actif ;
une gaine interne (12) entourant le noyau (11), la gaine interne (12) ayant un indice de réfraction inférieur à un indice de réfraction du noyau (11) ; et
une gaine externe (13) entourant la gaine interne (12), la gaine externe (13) ayant un indice de réfraction inférieur à un indice de réfraction de la gaine interne (12), dans laquelle :

la gaine interne (12) est torsadée autour d'un axe central du noyau (11) ;
dans une section transversale verticale à une direction longitudinale, une circonférence externe de la gaine interne (12) présente un polygone avec des angles arrondis ; et
une angularité c définie par l'expression (1) et l'expression (2) est de 0,15 ou plus et de 0,8 ou moins,

$$A = \cos(\pi/n) \dots (1)$$

$$c = \{1 - (d1/d2)\}/(1 - A) \dots (2)$$

où un nombre de sommets du polygone est défini comme n, un diamètre d'un cercle circonscrit de la circonférence externe de la gaine interne (12) est défini comme d2, et un diamètre d'un cercle inscrit de la circonférence externe de la gaine interne (12) est défini comme d1,
où un nombre de torsions par mètre dans une direction parallèle à la direction longitudinale est défini comme N et

**caractérisée en ce que** c $\times$ N $\geq$ 2,25 et c $\times$ N est égal à 12 ou moins.

2. Fibre optique d'amplification (10) selon la revendication 1, dans laquelle l'angularité c est de 0,25 ou plus et de 0,8 ou moins.

3. Fibre optique d'amplification (10) selon l'une quelconque des revendications précédentes, dans laquelle c $\times$ N $\geq$ 2,5 et c $\times$ N est égal à 12 ou moins.

4. Fibre optique d'amplification (10) selon l'une quelconque des revendications précédentes, dans laquelle une excentricité du noyau (11) au centre du cercle inscrit est inférieure ou égale à 5 $\times$ 10$^{-6}$ m.

5. Fibre optique d'amplification (10) selon l'une quelconque des revendications précédentes, dans laquelle le nombre n de sommets du polygone est n = 6 ou n = 8.

6. Dispositif laser (1, 2) comprenant :

la fibre optique d'amplification (10) selon l'une quelconque des revendications précédentes ; et au moins une source de lumière laser configurée pour émettre une lumière qui se propage à travers la fibre optique d'amplification (10).

FIG.1

FIG.2

FIG.3

FIG.4

FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001013346 A
- US 2012275015 A1
- US 2011146071 A1